# FASCICULE DE BREVET EUROPEEN

(11) **EP 0 680 444 B1**
(45) Date de publication et mention de la délivrance du brevet: **04.06.1997**
(21) Numéro de dépôt: 94902815.3
(22) Date de dépôt: 15.12.1993
(51) Int. Cl.: B65D 35/12, B29C 65/02

(54) **PROCEDE DE FABRICATION D'UN TUBE A PAROI CONTENANT PLUS DE 60 % DE MATIERE PLASTIQUE ET AYANT UNE JUPE ET UNE TETE RETREINTE, ET TUBE CORRESPONDANT**
VERFAHREN ZUR HERSTELLUNG EINER TUBE MIT WÄNDEN AUS MEHR ALS 60% KUNSTSTOFF, VERSEHEN MIT SCHÜRZE UND HALS UND ENTSPRECHENDE TUBE.
METHOD FOR PRODUCING A TUBE HAVING A WALL CONTAINING OVER 60 % OF A PLASTIC MATERIAL AND HAVING A BODY AND A NECKED HEAD, AND RESULTING TUBE

(30) Priorité: 27.01.1993 FR 9301065
(43) Date de publication de la demande: 08.11.1995
(73) Titulaire: CEBAL S.A., F-92115 Clichy (FR)
(72) Inventeur: REBEYROLLE, Michel, F-51800 Sainte-Menehould (FR); BENQUET, Jacques, F-21240 Talant (FR); BRICOUT, Emmanuel, F-51800 Sainte-Menehould (FR)
(74) Mandataire: Pigasse, Daniel
(86) Numéro de dépôt international: FR9301249
(87) Numéro de publication internationale: WO9416959

(56) Documents cités:
- EP-A- 0 475 126
- AU-A- 477 254
- CH-A- 541 409
- DE-A- 1 504 862
- DE-A- 4 130 538
- GB-A- 1 118 632
- GB-A- 1 226 947

## Description

L'invention concerne un procédé de fabrication d'un tube à paroi contenant plus de 60% en volume de matière plastique, à partir d'une ébauche tubulaire essentiellement cylindrique, cette ébauche étant superficiellement en matière(s) plastique(s) polymérique(s) à l'intérieur et à l'extérieur et ledit tube ayant une jupe et une tête rétreinte, ledit procédé comprenant un formage avec rétreint d'une portion d'extrémité de cette ébauche par rapprochement d'outillages intérieur et extérieur, ledit formage produisant sur ladite portion des plis de chiffonnage.

Un tel procédé et un tel tube sont connus par le brevet US-A-3 823 850 = AU-A-477254. Selon ce brevet, le formage de la tête rétreinte du tube, dont la paroi comporte de préférence une couche barrière métallique entre des couches de matière plastique, est fait mécaniquement sans chauffage entre un outillage extérieur et des doigts pivotant à travers cet outillage, donnant des ondulations qui sont stabilisées par chauffage de l'intérieur du tube. Les ondulations sont ensuite déformées par rotation en plis rigides unidirectionnels et uniformes qui se succèdent. Puis on introduit de préférence la tête plissée dans un autre jeu d'outillages à l'intérieur duquel on injecte de la matière plastique qui habille l'extérieur de la tête plissée et s'accroche sur les plis. Dans cette opération, on peut serrer la tête de sorte que les plis rigides empilés se lient entre eux sous l'effet de la chaleur de la matière plastique injectée et du serrage.
Ce procédé est compliqué et nécessite un jeu d'outillages spécifique pour la formation de plis différent de celui utilisé pour l'injection de la matière plastique. De plus, l'obtention de plis rigides de la tête rétreinte avant l'injection de matière plastique n'est possible qu'avec une paroi à couche barrière métallique, les parois avec couche barrière polymérique étant élastiques et ne conservant pas leurs plis.

La demanderesse a cherché à mettre au point un procédé moins complexe et adapté aux parois entièrement polymériques.

### DESCRIPTION DE L'INVENTION :

L'invention concerne un procédé de fabrication d'un tube à paroi contenant plus de 60% en volume de matière plastique, à partir d'une ébauche tubulaire essentiellement cylindrique, cette ébauche étant superficiellement en matière(s) plastique(s) polymérique(s) à l'intérieur et à l'extérieur et ledit tube à obtenir ayant une jupe et une tête rétreinte, procédé dans lequel on enfile ladite ébauche tubulaire autour d'un outillage intérieur, ledit tube dépassant de cet outillage d'une portion d'extrémité ayant une paroi tubulaire, et on forme cette portion d'extrémité au moyen d'outillages agissant sur ladite portion d'extrémité en produisant sur sa paroi des plis de chiffonnage et en écrasant ces plis, caractérisé en ce que :
- les outillages agissant sur la portion d'extrémité consistent en ledit outillage intérieur et en un outillage extérieur annulaire, les deux outillages définissant respectivement après leur rapprochement l'un de l'autre la surface intérieure et la surface extérieure de la tête rétreinte;
et en ce que:
a) avant formage, on chauffe ladite ébauche de façon à obtenir pour ladite portion d'extrémité, une température au moment du formage au moins égale au point de fusion de chacune desdites matière(s) plastique(s) polymérique(s) constituant superficiellement l'intérieur et l'extérieur de la paroi de ladite ébauche, ces matières étant ainsi dans un état fondu visqueux au moment du formage de la portion d'extrémité;
b) on forme la portion d'extrémité initialement tubulaire chauffée selon a) par le seul rapprochement des outillages intérieur et extérieur, ce rapprochement produisant les opérations successives suivantes:
   b1) rétreint de la portion d'extrémité en chiffonnant sa paroi selon lesdits plis de chiffonnage;
   b2) écrasement desdits plis de chiffonage entre les outillages intérieur et extérieur;
   b3) soudage complet de ces plis entre eux;
   b4) obtention de la tête rétreinte, qui comprend au moins une épaule et est parfaitement soudée dans son épaisseur et sur ses surfaces intérieure et extérieure.

Dans la présente description, on appelle "pli" une "partie d'une paroi rabattue sur elle-même et formant une double épaisseur", et "pliure" la ligne ou zone étroite de rabattement ou pliage d'un tel "pli".

Le procédé de l'invention convient parfaitement pour la fabrication de tubes dont les parois ont diverses structures : par exemple, en une seule couche, ou multicouches sans couche intermédiaire à effet barrière important vis-à-vis de l'oxygène, de l'humidité, des arômes et des parfums, ou encore, selon le problème posé, multicouches comportant une couche intermédiaire à effet barrière important, typiquement d'épaisseur faible 0,01 à 0,05 mm au niveau de l'ébauche tubulaire, que cette couche soit métallique ou en matière plastique polymérique. Alors que les matières plastiques peuvent être déformées en allongement, elles ne peuvent pas être raccourcies à moins qu'il ne s'agisse de produits rendus thermorétractables. La demanderesse a eu l'idée surprenante de partir d'une ébauche tubulaire extérieurement et intérieurement en matière(s) plastique(s) polymérique(s), portée à une température au moins égale au point de fusion de cette ou ces matière(s) plastique(s) et de conformer entre des outillages intérieur et extérieur définissant la géométrie du tube désiré une portion de cette ébauche en la tête rétreinte du tube. Le rétreint, défini par le rapport des diamètres extérieur maximal (celui de la jupe) et minimal qui est typiquement supérieur à 1,25 et encore plus typiquement supérieur à 1,4, se fait avec un chiffonnage en plis commandé par le seul rapprochement des outillages intérieur et extérieur, et le formage opérant ce rétreint produit une tête rétreinte parfaitement, soudée dans son épaisseur et sur ses surfaces intérieure et extérieure.

On obtient les effets remarquables et surprenants suivants :
- les plis chiffonnés entre les outillages qui se sont rapprochés et écrasés se soudent parfaitement les uns aux autres sur chaque face de la tête rétreinte, ils sont désordonnés et amincis de façon variable dans l'épaisseur de la tête rétreinte ;
- ces faces sont lisses, les pliures écrasées des plis sont peu ou pas visibles;
- grâce à la température de formage, les couches successives de la paroi de l'ébauche, en particulier sa ou ses couches intermédiaires à effet barrière, se replient et s'écrasent en s'amincissant, et cela sans se rompre;
- par ce mécanisme de pliage et d'écrasement amincissant, on obtient typiquement une tête ayant une épaule annulaire dont l'épaisseur est voisine de l'épaisseur de la jupe, cette épaule étant alors facile à écraser latéralement facilitant le vidage du tube par un consommateur.

Ici, par le choix de la température au moment du formage, on obtient malgré les plis de chiffonnage, une paroi de tête rétreinte ayant les mêmes qualités d'usage qu'une paroi sans plis.
Il convient de rappeler que le point de fusion des matières plastiques correspond à la fusion de ses cristallites ou phases critallines, et que à partir de ce point de fusion la matière se trouve dans un état fondu visqueux dont la viscosité d'abord élevée diminue avec la temperature, les températures et viscosités propres au moulage par injection se situant par exemple à plus de 100°C au-dessus du point de fusion.
La température de formage donnant aux matières plastiques polymériques un tel "état fondu visqueux" est à distinguer nettement des températures donnant des états ramollis, utilisées par exemple pour du thermoformage et situées en-dessous du point de fusion.

Le procédé est très simple, il comprend seulement un chauffage et un formage par écrasement donnant un soudage parfait de la tête rétreinte obtenue. Micrographiquement, on ne distingue les plis entre eux que par leurs couches intermédiaires barrière lorsqu'ils en comprennent. Le formage et la qualité des tubes obtenus s'appliquent de la même façon aux différentes qualités de tubes : entièrement polymériques avec sans couche barrière, ou polymériques à plus de 60% en volume avec une couche barrière métallique.
On produit habituellement dans le procédé, avec l'écrasement et le soudage des plis entre eux, un exsudat de matière plastique desdits plis sur chaque face de l'épaule conformée formant un glaçage de cette face. En outre, on écrase avantageusement lesdits plis de façon à obtenir une épaisseur de ladite épaule conformée inférieure à 1,35 fois l'épaisseur de la jupe du tube. L'épaule est alors écrasable latéralement, ce qui permet un vidage plus complet du tube, particulièrement lorsque l'épaisseur de sa jupe est inférieure à 0,7 mm.

Parmi les modalités de chauffage de la portion d'extrémité à former en une tête rétreinte, la première modalité suivante est particulièrement intéressante pour les fabrications de grande série : selon l'étape (a) on dispose d'abord l'ébauche tubulaire entre ledit outillage intérieur ayant une partie sommitale qui définit intérieurement ladite tête rétreinte et un manchon rigide entourant la portion d'extrémité avec un jeu faible et la dépassant vers le haut, ladite portion d'extrémité de l'ébauche et ladite partie sommitale de l'outillage étant en position haute, puis on chauffe par de l'air chaud l'intérieur de ladite portion jusqu'à ce que celle-ci se déforme en une portion rétreinte ondulée ayant un bourrelet d'extrémité fondu, puis on éloigne ledit manchon de ladite portion rétreinte ondulée et on procède à l'étape (b).

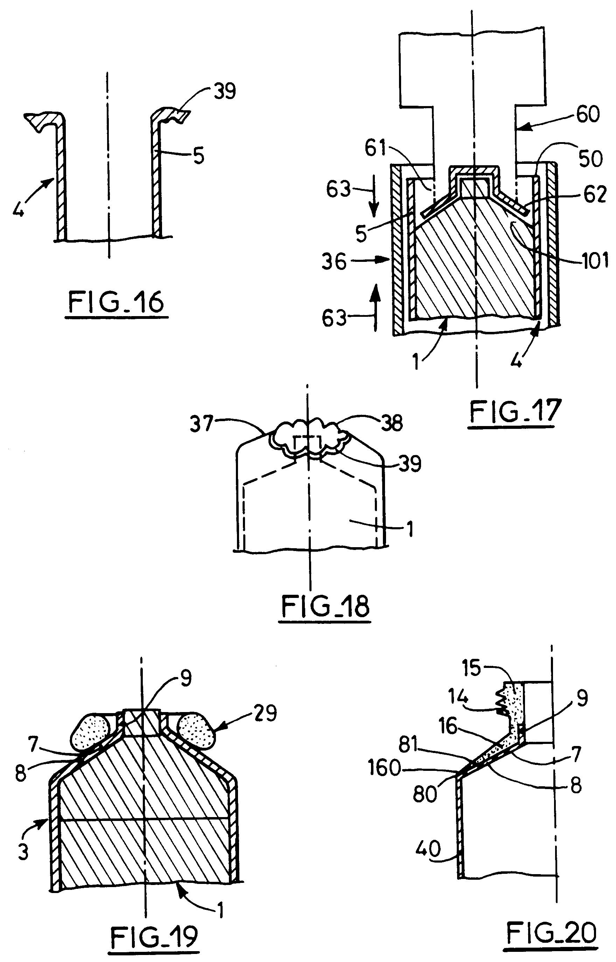

L'air pourrait être remplacé par un autre gaz ou mélange de gaz.
La disposition de chauffage ci-dessus, se résumant en : "position haute + chauffage par l'intérieur de la portion d'extrémité + manchon la dépassant" est critique :
- sans manchon, l'extrémité chauffée se déforme en une corolle extérieure (fig.16)
- avec le manchon et seulement s'il dépasse vers le haut la portion d'extrémité, on obtient de façon reproductible un début de rétreint avec des ondulations (fig.18), la réduction du diamètre moyen de l'extrémité étant alors typiquement de 3 à 8 mm et s'accompagnant d'un bourrelet d'extrémité fondu montrant qu'on a dépassé la température désirée pour le formage (b).
Le manchon empêche ainsi la déformation de la portion d'extrémité vers l'extérieur, et il semble retenir un nuage d'air chaud qui enveloppe l'extrémité de la portion et cause de façon surprenante son inflexion vers l'intérieur. Il paraît aussi, à la manière d'un radiateur, jouer un rôle dans la régularité du chauffage par l'intérieur de la portion d'extrémité. Une position basse ne permettrait pas un tel résultat, l'air ou le gaz montant, et la portion d'extrémité étant tirée vers le bas par la gravité.

Le début de rétreint ainsi obtenu avec son bourrelet fondu permet un bon contrôle du chauffage et prépare le rétreint avec écrasement rapide opéré par le formage.

La première modalité de chauffage est exécutée selon les moyens préférentiels suivants :
- on chauffe l'intérieur de ladite portion d'extrémité en y introduisant une buse éjectant radialement de l'air chauffé à au moins 250°C par des orifices latéraux, comprenant des orifices qui sont pour le chauffage à un niveau compris entre la mi-hauteur de la portion d'extrémité et 3 mm en-dessous de l'extrémité de ladite portion ;
- de préférence alors, on réduit l'échauffement de la partie sommitale au moyen d'un élément déflecteur et isolant fixé sous la buse ;
- de préférence, pour améliorer l'homogénéité de température de la portion d'extrémité au moment du formage, l'outillage extérieur est chauffé entre 100 et 150°C et pourvu d'un revêtement intérieur anti-adhésion.

Une deuxième modalité de chauffage est intéressante car elle simplifie le processus et le dispositif utilisés : les étapes (a) et (b) sont confondues, le chauffage de la portion d'extrémité étant asssuré par l'outillage extérieur chauffé entre 150 et 300°C pendant l'écrasement desdits plis de chiffonnage. Mais l'épaule rétreinte a alors une surface d'aspect un peu granuleux, même avec un revêtement intérieur anti-adhésion de l'intérieur de l'outillage extérieur ou matrice.

La température au moment du formage est de préférence supérieure de 10 à 100° C à la température ou point de fusion de chacune des matières plastiques superficielles de la paroi. Si la température est plus proche du point de fusion, le soudage des plis les uns sur les autres risque d'être imparfait. Si la température dépasse de plus de 100° C le point de fusion de la matière concernée, la matière plastique moins visqueuse risque de ne plus bien tenir sur la face par mouillage et de couler.

Pour la facilité du réglage de la température au moment du formage, correspondant par exemple à un préchauffage à 10 ou 20° C de plus, il est préféré que les deux matières plastiques superficielles de la paroi de l'ébauche aient des points de fusion voisins, différant d'au plus 40° C. Ceci permet d'avoir à la température choisie des viscosités et des consistances d'états fondus visqueux assez proches, donnant des mêmes résultats de soudage des plis entre eux sur l'intérieur et sur l'extérieur de la tête rétreinte.

Pour des raisons d'économie et de qualité du soudage des plis entre eux, on préfère choisir les matières constituant superficiellement la paroi de l'ébauche dans le groupe comprenant les 5 familles suivantes :
- les polyéthylènes dont les polyéthylènes linéaires;
- les polypropylènes;
- les polyamides;
- les polyamides modifiés;
- les alliages polymériques tels que PE/PA et PP/PA;
- et les polyesters saturés, comprenant les PET (polyéthylène téréphtalate) et le PBT (polybutylène téréphtalate).

Il n'est pas obligatoire, mais fortement préférable que les matières plastiques constituant superficiellement la paroi de l'ébauche appartiennent toutes deux à une même famille, elles ont alors au moment du formage des viscosités et facilités d'écrasement comparables.

En particulier, on utilise la famille des polyéthylènes dont les polyéthylènes linéaires avec une température au moment du formage de préférence comprise entre 150 et 220° C. Du côté intérieur, on peut alors utiliser de façon alternative une résine ionomère à base de polyéthylène, par exemple du SURLYN (marque déposée).
En particulier encore, on utilise la famille des polypropylènes avec une température au moment du formage comprise entre 210 et 270° C.

Comme on l'a déjà indiqué, l'ébauche peut avoir une paroi faite d'une seule matière polymérique, qui est alors confondue avec les matières constituant superficiellement la paroi dans l'exposé qui précède.

Un deuxième cas particulièrement intéressant est celui dans lequel les matières plastiques polymériques constituant superficiellement la paroi de l'ébauche forment respectivement une couche superficielle intérieure et une couche superficiel le extérieure de ladite paroi, celle-ci étant multicouche et comprenant, entre lesdites couches superficielles, au moins une couche intermédiaire à effet barrière liée à ces couches superficielles.

Cette ou ces couches intermédiaires s'étendent alors de façon continue et chacune en une seule pièce du bas de la jupe du tube jusqu'en haut de la tête rétreinte. Leurs plis à l'intérieur des plis écrasés de la paroi rendent la protection barrière encore plus efficace au niveau de la tête rétreinte. Dans la plupart des cas, la paroi de l'ébauche est d'épaisseur 0,2 à 0,9 mm, et lesdites couches intermédiaires à effet barrière y ont une épaisseur totale comprise entre 0,01 et 0,05 mm et sont en une matière faisant partie du groupe formé par : EVOH (copolymère d'éthylène et d'alcool vinylique), PVDC (polychlorure de vinylidène), PAN (polyacrylonitrile), PVDF (polyfluorure de vinylidène), PA (polyamide), PA modifiés dont le MXD6 (métaxylènediamine 6), copolymère de chlorure de vinyle et de vinylidène ("saran"), et l'aluminium faiblement allié, habituellement appelé "aluminium" dans de tels usages.

Chaque couche intermédiaire à effet barrière peut encore être en l'une des matières du groupe constitué par le PE et les polyesters, cette couche étant recouverte par un dépôt comprenant de la silice et/ou de l'alumine et/ou du carbone amorphe.

En ce qui concerne la configuration et la structure de la tête rétreinte :
- celle-ci comprend typiquement un col de diamètre plus faible que le diamètre de la jupe et une épaule conformée annulaire reliant ce col à la jupe;
- dans le procédé de formage de l'invention, on écrase les plis de façon à obtenir, pour ladite épaule, une épaisseur inférieure à 1,35 fois l'épaisseur de ladite jupe, pouvant typiquement être comprise entre 0,9 fois et 1,25 fois ladite épaisseur de la jupe et de préférence inférieure ou égale à 0,6 mm pour sa facilité d'écrasement latéral;
- le col ci-dessus peut être formé directement en un goulot du tube. L'outillage extérieur du procédé peut alors comprendre des tiroirs annulaires qui se resserrent lors du soulèvement de l'ébauche par l'outillage intérieur, ces tiroirs portant des reliefs intérieurs façonnant des reliefs de fixation d'un bouchage sur le col de l'ébauche devenu un goulot.

On peut encore, pour obtenir un goulot aux dimensions souhaitées, fixer ensuite sur la tête rétreinte une couronne annulaire en matière plastique constituant alors l'extérieur du goulot du tube désiré. Cette couronne peut être réalisée de plusieurs façons :
- par moulage par compression sur la tête rétreinte d'une ébauche annulaire préchauffée à au moins 70° C, et jusqu'à environ 140° C au-dessus du point de fusion de la matière de la couche superficielle extérieure du tube, l'outillage intérieur étant en place; il s'agit alors soit de la déformation avec moulage d'une ébauche dans un état ramolli, soit du moulage par compression d'une ébauche dans un état fondu visqueux ;
- par collage ou soudage d'une couronne rapportée, comme illustré dans les exemples;
- par moulage par injection sur la tête rétreinte. Particulièrement lorsque la jupe est déjà décorée, la portion rétreinte garde sur sa surface extérieure la mémoire des effets d'effluves électriques appliquées avant la décoration de sorte que la fixation de la couronne y est de qualité moins fiable, et on peut améliorer la fixation par l'intérieur du goulot, grâce à des bretelles moulées se terminant sous l'épaule (voir les exemples).

Pour toutes les méthodes de fixation ci-dessus autres que le collage, la matière plastique de la couronne annulaire est de préférence compatible en fusion avec celle constituant l'extérieur du tube conformé de façon à obtenir une soudure parfaite de la couronne à la tête rétreinte.

Pour consolider la fixation de la couronne annulaire précédente sur la tête rétreinte du tube, on peut lui donner une base élargie extérieurement épousant l'épaule conformée du tube. Pour obtenir une épaule du tube en bonne partie écrasable, on préfère limiter la largeur de cette base annulaire selon une génératrice radiale de l'épaule à moins de la moitié de la largeur de cette épaule, ou encore limiter son épaisseur à moins de 0,4 mm à l'extérieur de la demi-largeur de l'épaule.

L'épaule du tube obtenu ou "épaule finie" est la partie annulaire s'étendant depuis le pied du goulot jusqu'à la jonction de l'épaule conformée avec la jupe. Pour que cette épaule soit écrasable latéralement son épaisseur totale est de préférence inférieure à 1 mm à mi-largeur et inférieure à 0,8 mm à ladite jonction.

Toutes les méthodes de fixation de la couronne annulaire listées ci-dessus peuvent être mises en oeuvre en utilisant, comme outillage intérieur maintenant le tube conformé, l'outillage intérieur du formage à chaud, ou un outillage identique, ce qui est un avantage. On peut aussi avec les méthodes de moulage réaliser une couronne annulaire revêtant non seulement l'extérieur du col du tube conformé, mais aussi son intérieur, pourvu que la matière plastique de la couronne soit compatible en fusion avec les matières plastiques constituant respectivement l'extérieur et l'intérieur dudit tube de façon à obtenir un soudage parfait de la couronne aux deux faces du tube, et en utilisant alors un outillage intérieur définissant un goulot plus étroit que l'intérieur du col du tube. Ces méthodes sont celles impliquant un dépassement du point de fusion de la matière plastique de la couronne, à savoir le moulage typiquement par injection, et la compression de l'ébauche annulaire dans un état fondu encore suffisamment visqueux, état obtenu par préchauffage entre le point de fusion et ce point de fusion + 140° C.

L'invention a encore pour objet un tube à paroi contenant plus de 60% de matière plastique, cette paroi étant superficiellement en matière(s) plastique(s) polymérique(s) à l'intérieur et à l'extérieur, ledit tube ayant une jupe et une tête rétreinte comprenant une épaule annulaire conformée, la tête rétreinte ayant des plis chiffonnés, empilés et liés entre eux à l'intérieur et à l'extérieur de ladite paroi, caractérisé en ce que :
- ladite jupe a une épaisseur comprise entre 0,2 et 0,9 mm,
- ladite épaule annulaire a une largeur de 4 à 20 mm,
- la matière du raccordement entre ladite jupe et ladite épaule (8) est unique et continue,
- chaque face de l'épaule est glacée par un exsudat de la matière plastique constituant superficiellement ladite face, cette matière plastique s'étant échappée à l'état fondu des plis et ayant été étalée et lissée,
- lesdits plis sont parfaitement soudés entre eux et sont amincis de façon variable de sorte que ladite épaule comportant lesdits plis a une épaisseur inférieure à 1,35 fois ladite épaisseur de la jupe et est facilement écrasable latéralement.

Ce tube a une paroi qui contient de préférence une couche intermédiaire à effet barrière et une tête rétreinte comportant un col de diamètre plus faible que celui de la jupe et une épaule annulaire reliant ce col à ladite jupe, cette épaule comportant lesdits plis écrasés et soudés et ayant une épaisseur comprise entre 0,9 fois et 1,25 fois l'épaisseur de la jupe, et ladite couche intermédiaire s'étendant en une seule pièce depuis le bas de la jupe jusqu'au haut de l'épaule avec des plis amincis inclus dans lesdits plis de l'épaule.

Il est intéressant de noter que les faces extérieure et intérieure de l'épaule sont chacune glacées par un exsudat de matière plastique qui s'est échappée des plis écrasés et a été étalée et lissée par les outillages.

Le col et l'épaule du tube sont souvent surmontés d'une couronne annulaire en matière plastique liée au col et à l'épaule et constituant l'extérieur du goulot du tube. Cette couronne ne joue alors aucun rôle dans le soudage parfait des plis de la tête rétreinte, provenant du formage à chaud de cette tête.

Les autres caractéristiques du tube ressortent de la description du procédé et/ou des exemples.

De façon typique, les jupes des tubes selon l'invention ont un diamètre compris entre 13 et 55 mm. Les tubes ayant des couches barrière sont particulièrement intéressants pour conditionner des produits liquides, crémeux ou pâteux aromatisés ou parfumés, la protection barrière étant en une pièce et renforcée au moins au niveau de l'épaule.

### AVANTAGES DE L'INVENTION

- Obtention en une seule opération de formage à chaud d'un tube à tête rétreinte parfaitement soudée dans toute son épaisseur à partir d'une seule ébauche tubulaire;
- Tube à couche barrière continue, la tête rétreinte contenant des plis superposés qui renforcent l'effet barrière;
- Adjonction d'un extérieur de goulot en matière plastique par un choix de méthodes simples, utilisant l'outillage intérieur de formage à chaud.
- Tube à épaule écrasable latéralement, d'épaisseur facilement réglée.

### EXEMPLES

La figure 1 représente un dispositif de formage selon l'invention, avec une ébauche tubulaire avant formage ainsi que le tube formé obtenu, en demi-coupe axiale.

La figure 2 représente un tube obtenu par formage à la température ambiante d'un premier type d'ébauche, à titre de comparaison (essai hors invention), en perspective cavalière.
La figure 3 représente le tube obtenu selon l'invention à partir d'une ébauche de ce premier type, en demi-coupe axiale

Les figures 4 à 6 représentent des tubes semblables surmontés de couronnes au moins extérieures en matière plastique.

La figure 7 représente l'aspect extérieur de la face intérieure de l'épaule du tube de la figure 6.

Les figures 8 à 11 représentent des aspects micrographiques d'un tube formé selon l'invention à partir d'un deuxième type d'ébauche, au niveau respectivement du début de l'épaule (Fig. 8 et 9) et du haut de cette épaule raccordé à une couronne annulaire moulée sur la tête du tube (Fig. 10 et 11), selon des coupes axiales.

La figure 12 représente un tube surmonté d'une couronne annulaire moulée comportant des bretelles de fixation de cette couronne à l'intérieur du tube, en demi-coupe axiale.

La figure 13 représente la fixation d'une couronne annulaire en matière plastique sur la tête d'un tube, par compression de cette couronne chauffée, en demi-coupe axiale.

La figure 14 représente le soudage par ultra-son d'une couronne annulaire sur la tête d'un tube, en demi-coupe axiale.

La figure 15 représente le soudage par induction HF d'une couronne annulaire sur la tête d'un tube à couche barrière métallique.

La figure 16 représente une ébauche tubulaire après un premier type de chauffage par l'intérieur, en coupe axiale.

La figure 17 représente une ébauche tubulaire en place pour un deuxième type de chauffage par l'intérieur, en coupe axiale.

La figure 18 représente l'ébauche de la figure 17 après chauffage, en perspective.

La figure 19 représente un tube à tête rétreinte surmonté d'une ébauche annulaire dans un état fondu visqueux, en coupe axiale.

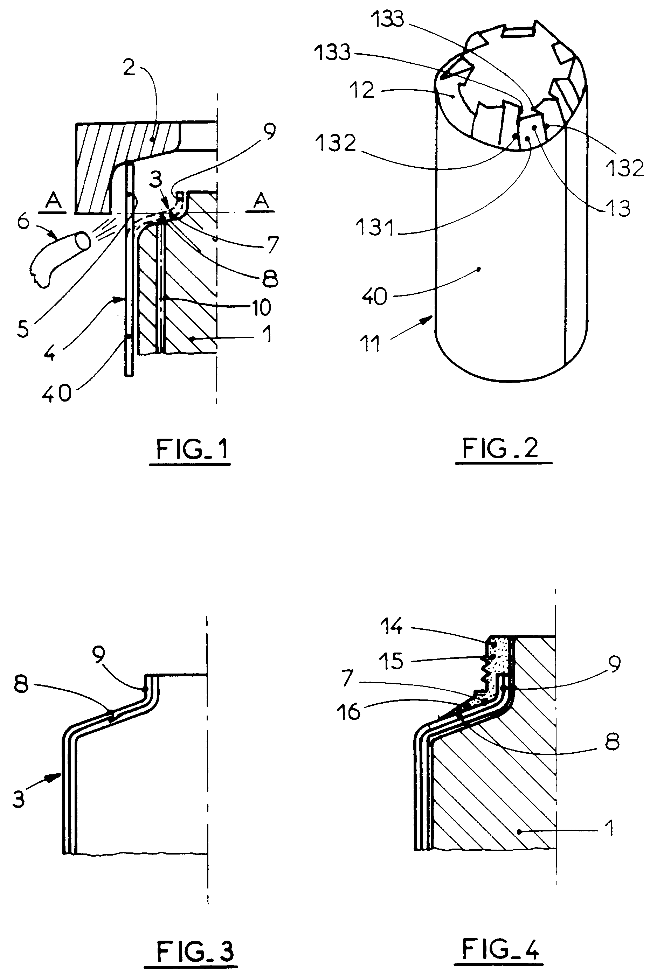

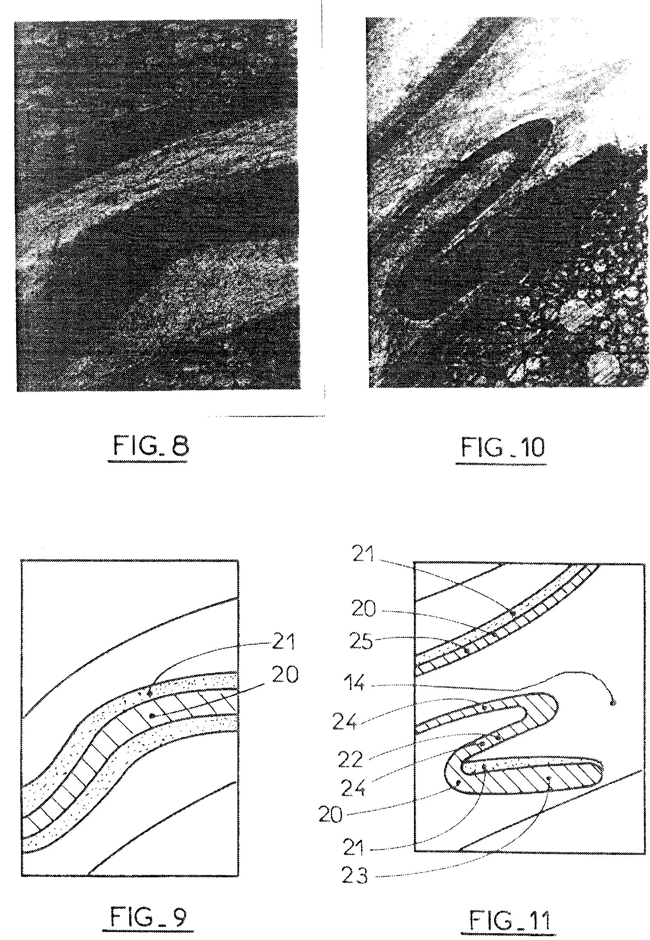

La figure 20 représente le même tube après moulage par compression de ladite ébauche annulaire, en demi-coupe axiale.
1) Principe de l'invention
   Sur la figure 1, on voit un outillage intérieur ou mandrin 1 et un outillage extérieur annulaire 2 formant respectivement l'intérieur et l'extérieur du tube à obtenir 3.
   L'ébauche tubulaire cylindrique 4, de diamètre extérieur 35 mm, est enfilée autour du mandrin 1 et en dépasse d'une portion supérieure 5. L'ébauche 5 est roulée-soudée et comprend des couches superficielles intérieure et extérieure en polyéthylène basse densité (PE.BD). On a chauffé la portion 5 avec une buse à air chaud 6 à 190 à 200° C avant de refermer l'outillage 2, par déplacement relatif axial par rapport au mandrin 1, sur la portion 5 et de la serrer sur ce mandrin, obtenant le tube 3 formé à chaud selon l'invention qui comprend une jupe 40 qui est la partie non modifiée de l'ébauche 4, et une tête rétreinte 7 comportant une épaule 8 et un col 9.
   Le tube a ensuite été éjecté du mandrin 1 par pression d'air selon un ou des conduits tels que 10.
   On voit que seule la portion 5 du tube est nécessairement chauffée. La tête rétreinte 7 faite de plis écrasés et parfaitement soudés entre eux a des surfaces intérieure et extérieure lisses, glacées par le PE fondu qui s'est échappé des plis écrasés et s'est étalé au contact des surfaces lisses des outillages.
2) Essais sur une ébauche multicouche d'un premier type
   Ce premier type d'ébauche tubulaire cylindrique est obtenu par roulage et soudage avec compression de la soudure d'un film multicouche d'épaisseur 0,31 mm comprenant une couche intermédiaire en Al d'épaisseur 37 micromètres liée par des couches adhésives d'EAA à des couches superficielles de PE.BD, à savoir une couche extérieure chargée de pigment blanc et d'épaisseur 70 micromètres et une couche intérieure transparente de 90 micromètres.
   La figure 2 représente un tube 11 formé à partir d'une ébauche de ce type avec le dispositif de la figure 1, sans chauffage de la portion à rétreindre. La portion rétreinte obtenue 12, consistant en une espèce d'épaule 12 placée au-dessus de la jupe 40, montre bien le résultat du rétreint : celui-ci s'opère par des ondulations vers l'extérieur et l'intérieur qui sont écrasés en des plis tel que le pli 13 qui comprend une portion extérieure 131 encadrée par deux pliures 132 et deux portions arrière 133 refermant en partie ce pli 13. Ces plis sont desserrés par retour élastique. Cet échantillon de comparaison 11 permet de mieux comprendre l'effet du procédé de l'invention.

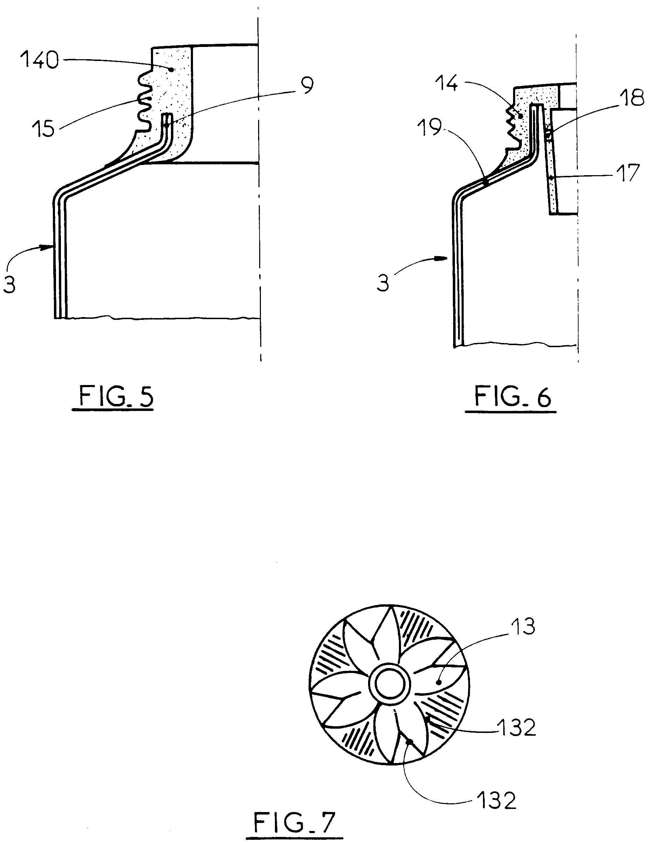

   La figure 3 schématise un tube 3 formé avec le même dispositif et le même serrage entre les outillages 1 et 2, mais cette fois avec un chauffage à 190 à 200° C d'une ébauche du premier type. L'épaule 8 et le col 9 de la tête rétreinte 7 sont bien lisses, l'épaisseur de l'épaule 8 est de 0,35 mm et son dessous, le même pour les tubes des Fig. 3 à 6, laisse voir par transparence (Fig. 7) l'organisation des plis 13 parfaitement soudés et en rosace correspondant à des pliures 132 plus ou moins importantes. La face extérieure de l'épaule 8 laisse voir par semi-transparence à travers sa surface lisse de PE quelques "fantômes" de pliures sous-jacentes.
   La figure 4 représente le tube 3 surmonté d'une couronne annulaire 14 constituant l'extérieur du goulot 15. Cette couronne a été moulée par injection de PE en utilisant comme outillage intérieur 1 l'outillage intérieur 1 de formage qui se prolonge au-dessus du col 9 en vue de cette adjonction. La couronne 14 est soudée en parfaite continuité avec la tête rétreinte 7, sa base élargie 16 se termine avec moins de 0,3 mm d'épaisseur au-delà de la moitié de la largeur de l'épaule annulaire 8.
   La figure 5 représente un tube 3 identique à celui des figures 3 et 5, surmonté d'une couronne annulaire 140 en PE moulée, soudée en parfaite continuité avec l'intérieur et avec l'extérieur de la tête rétreinte. Le diamètre intérieur du goulot 15 ainsi défini est inférieur de 2 mm au diamètre intérieur du col 9, on a utilisé pour le moulage un outillage intérieur différent de l'outillage intérieur du formage.
   La figure 6 représente un autre tube 3 sur lequel est moulé un goulot monobloc à double jupe, comprenant une couronne annulaire 14 extérieure au col 9 du tube 3 et une jupe intérieure 17 comportant des ouvertures de passage 18 de produit à rayures et des nervures conformément au brevet FR-B-2 622 542 = EP-B-315 554 = US-A-4 942 981 de la demanderesse. L'intervalle annulaire compris entre la couronne 14 et la jupe intérieure 17 est revêtu sur toute sa hauteur par le col 9 à couche barrière 19 en Al.
3) Essais sur une ébauche multicouche d'un deuxième type (Fig.8 à 12)
   Ce deuxième type d'ébauche tubulaire a été obtenu par roulage et soudage d'un film multicouche d'épaisseur 0,325 mm comprenant une couche barrière intermédiaire 20 d'épaisseur 20 micromètres en EVOH, liée par des couches adhésives à des couches en PE.
   On a obtenu un tube 3 ayant une épaule annulaire d'épaisseur 0,37 mm, selon la technique décrite à propos de la figure 1, et on a moulé sur sa tête rétreinte une couronne annulaire 14 en PE semblable à celle de la figure 4.
   Les figures 8 et 10 représentent des micrographies en coupe axiale de la paroi du tube, respectivement au milieu de l'arrondi du début de l'épaule et au niveau du haut de l'épaule à son raccordement avec la couronne 14. Pour faciliter la description, les figures 9 et 11 représentent respectivement l'essentiel des figures 8 et 10.
   On peut voir sur les figures 8 et 9 que la couche 20 d'EVOH a sensiblement conservé son épaisseur initiale et a un peu ondulé dans l'épaisseur, à cause de la différence de plasticité à chaud de l'EVOH par rapport au PE. Les couches adhésives 21 sont reprises en pointillé sur la figure 9.
   Les figures 10 et 11 donnent plusieurs renseignements sur le procédé et son résultat :
   - un double pli 22 de couche barrière 20 montre une extrémité 23 d'épaisseur peu différente de l'épaisseur initiale, qui a sans doute échappé à la superposition et à l'écrasement de plis, suivi de deux plis fortement amincis 24;
   - une deuxième portion 25 de couche barrière 20 appartient à un pli qui a été soudé avec le double pli contenant le double pli 22 de couche barrière;
   - sur la droite de l'extrémité 23 et du double pli 22, se trouve la couronne 14, en PE comme les couches superficielles du tube 3;
   - la continuité du soudage entre les plis, et entre ces plis formant l'épaule et la couronne annulaire, est parfaite. La coupe montre par endroits les couches adhésives 21, mais il n'y a aucune autre discontinuité dans le PE qui enveloppe les éléments décrits;
   - l'amincissement obtenu est étonnant, il peut être réglé à la demande par le choix de la température de formage à chaud et par le serrage des outillages 1 et 2 (figure 1).

   La figure 10 montre que les épaisseurs locales de la couche barrière et des plis eux-mêmes varient plus que du simple (24,25) au double (23) dans l'épaule conformée du fait de l'empilage irrégulier du procédé de l'invention.

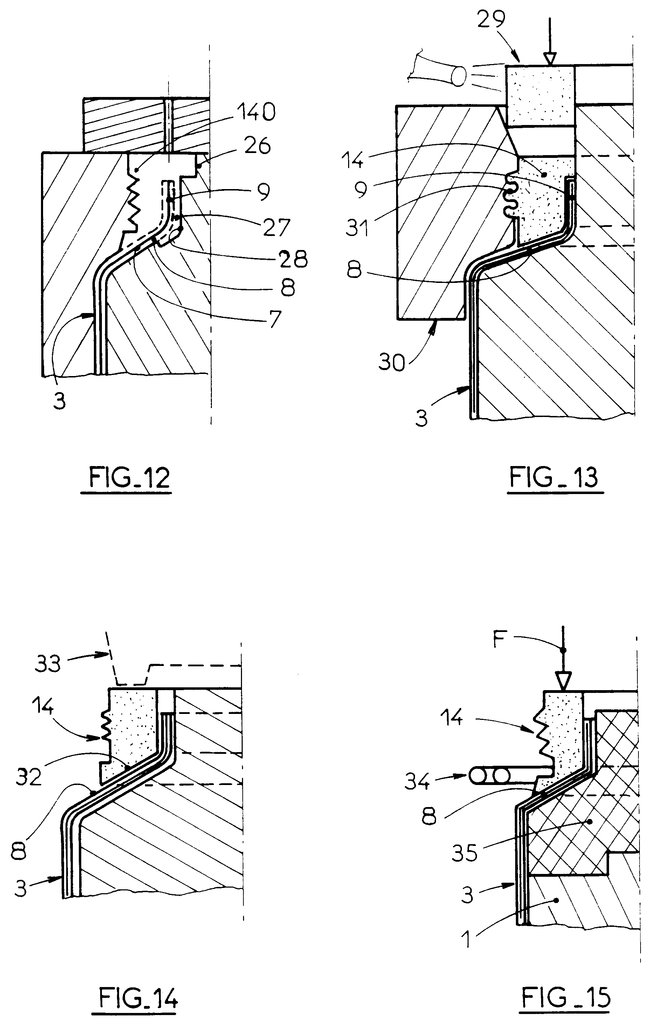

   La figure 12 montre un tube 3 obtenu à partir d'une ébauche du deuxième type, dont la tête rétreinte 7 est surmontée d'une couronne annulaire 140 en PE moulé aussi bien à l'extérieur qu'à l'intérieur de cette tête 7. La couronne 140 a un orifice 26 plus étroit que le diamètre intérieur du col 9, et sous cet orifice, 3 à 5 bretelles 27 se prolongeant en-dessous de l'épaule 8 et parfaitement soudées avec l'intérieur du tube 3 lui aussi en PE. La figure 12 montre l'outillage intérieur utilisé, comportant des rainures 28 permettant l'obtention facile des bretelles 27 à partir de la matière plastique fondue formant le haut du goulot avec son orifice plus étroit 26. Cette solution de fixation est particulièrement intéressante lorsque la jupe du tube a déjà été décorée après traitement de surface par effluves électriques (effet de couronne ou "corona"). La figure 12 montre aussi l'outillage extérieur et l'outillage supérieur avec canaux d'injection.
4) Autres méthodes de fixation d'une couronne annulaire en matière plastique sur la tête d'un tube
   La figure 13 représente le chauffage, ici par air chaud, d'une ébauche annulaire 29 en PE de géométrie appropriée suivi de sa compression entre le col 9 et l'épaule 8 du tube 3 d'une part, et un outillage extérieur 30. Le tube 3 a des couches superficielles compatibles en fusion avec le PE.
   L'ébauche 29 est chauffée entre 150 à 160° C avec de l'air chaud, elle est dans un état pâteux c'est-à-dire fondu très visqueux. La compression axiale de l'ébauche 29 en une couronne annulaire 14 produit un moulage donnant un soudage parfait à l'extérieur du tube 3 et des reliefs 31 d'accrochage d'un bouchage par remplissage de reliefs en creux de l'outillage 30.
   La figure 14 représente une disposition de soudage d'une couronne annulaire 14 préparée à l'avance avec une face annulaire de dessous 32 s'appliquant parfaitement sur l'épaule 8 du tube 3. Les matières ainsi en contact sont du PE. La couronne 14 est soudée avec un transducteur ultrasonore annulaire 33. On obtient ainsi une fixation annulaire soudée de la couronne 14 sur l'épaule 8.
   La figure 15 représente une disposition de soudage par induction d'une couronne annulaire 14 préparée à l'avance comme celle de la figure 14 appliquée parfaitement par un effort axial F sur l'épaule 8 du tube 3 qui a été formé, selon l'invention, à partir d'une ébauche du premier type, c'est-à-dire avec une couche barrière intermédiaire en Al. La boucle d'induction 34 fait chauffer cette couche ainsi que les couches superficielles de l'épaule 8 et de la couronne 14 qui sont en contact, et produit une soudure de ces couches en PE avec continuité parfaite. La tête du tube 3 s'appuie pendant cette opération sur un outillage intérieur 35 en matière isolante dure, remplaçant par exemple le haut de l'outillage 1 de la figure 1.
5) Essais de caractère industriel :
   Ces essais ont porté sur des milliers d'ébauches tubulaires cylindriques 4 de diamètre extérieur 35 mm, appartenant à deux types:
   - des ébauches multicouches coextrudées d'épaisseur 0,5 mm constituées d'une couche barrière intermédiaire d'épaisseur 20 micromètres en EVOH liée par des couches adhésives à des couches superficielles en PE (troisième type) ;
   - des ébauches multicouches laminées et roulées-soudées longitudinalement d'épaisseur 0,32 mm, également en EVOH 20 micromètres lié par des couches adhésives à des couches superficielles en PE (deuxième type).

   Il y avait 3 positions de travail, avec mouvement rapide de l'outillage intérieur supportant l'ébauche tubulaire d'une position à la suivante :
   position de chauffage ; position de formage à chaud donnant la tête rétreinte ; position de moulage avec compression d'une couronne annulaire sur la tête rétreinte.
   Les ébauches tubulaires 4 utilisées avaient plus de 150 mm de long et, en position de travail, ceinturaient chacune l'outillage intérieur 1 de façon à ce qu'une portion d'extrémité supérieure 5 de longueur 12 mm dépasse de cet outillage 1 (fig.17).
   5.1) Première disposition de chauffage :
      Les essais portaient sur des ébauches du troisième type.
      Une buse soufflant de l'air chaud à 320°C par une pluralité d'orifices latéraux 61 de diamètre 0,8 mm a été introduite à l'intérieur de chaque portion 5, les orifices latéraux 61 étant au niveau de la moitié supérieure de portion 5 et situés à moins de 3 mm de l'extrémité supérieure 50 de cette portion.
      Ce chauffage a abouti systématiquement en moins de 1,5 seconde, à la déformation de l'extrémité supérieure 50 de la portion 5 et de son voisinage en une corolle extérieure irrégulière 39 (fig.16). Cette forme n'allant pas dans le sens du rétreint et diminuant sa longueur est inacceptable en fabrication de série.
      Par rapport au dispositif satisfaisant de la fig.17, il n'y avait pas dans cette première disposition, de chauffage de la portion 5 par l'intérieur, de manchon 36 ni d'élément déflecteur et isolant 62 fixé sous la base 60. La buse avait un fond étanche non isolant en tôle qui ne débordait pas de sa paroi latérale.
   5.2) Deuxième disposition de chauffage :
      On a disposé un manchon rigide 36 en acier inoxydable d'épaisseur 5mm, coulissant verticalement autour de l'ébauche 4 comme indiqué par les flèches 63. En position haute (fig.17), il entoure la portion 5 avec un jeu diamétral inférieur à 1 mm et la dépasse vers le haut d'au moins 5 mm.
      Ce dépassement a été réglé à 20 mm pendant les séries d'essais les plus longues, portant chacune sur plusieurs centaines d'ébauches 4.
      Avec cette disposition, on a observé systématiquement une inversion de la direction de fléchissement de l'extrémité supérieure 50 de la portion 5 et de son voisinage par rapport à celle des essais (5.1). Le fléchissement est vers l'intérieur et, au bout d'un temps constant de soufflage d'air chaud à l'intérieur de la portion 5, on a obtenu une portion rétreinte ondulée 37, présentant un bord d'orifice ondulé 38 qui a un diamètre moyen de 27 à 30 mm, soit 4 à 7 mm plus faible que le diamètre intérieur de l'ébauche 4, et porte un bourrelet d'extrémité fondu 39.
      Le manchon 36 a ici un rôle important et reproductible, il semble retenir l'air chaud jusqu'au-dessus de l'extrémité 50, et procure un début de rétreint qui est surprenant. Le bourrelet d'aspect fondu, d'épaisseur typiquement comprise entre 0,5 et 2 mm, est la marque d'une température maximale atteinte beaucoup plus élevée que le point de fusion des couches superficielles de la portion 5, au moins 30°C de plus que ce point de fusion, et le rétreint 37 montre que la portion a elle-même atteint une température voisine.
      Dans les essais, la bonne qualité du chauffage, repérée par le rétreint 37 ci-dessus et son bourrelet d'extrémité fondu 38, a été vérifiée par la qualité des têtes rétreintes et écrasées par le formage à chaud qui a suivi ledit chauffage au bout d'un intervalle compris entre 2 et 3 secondes. Le formage est exécuté après retrait de la buse 60 vers le haut et coulissement du manchon 36 vers le bas.
      Après formage, le soudage des plis 13 dans l'épaisseur de l'épaule conformée 8 est parfait comme dans les essais sur des ébauches 4 du deuxième type (fig.8 à 12). L'épaisseur de cette épaule 8 était de 0,6 mm. Chaque face de l'épaule 8 est formée continuement par un exsudat de PE et est lisse et glacée. Les faces extérieures de quelques épaules 8 montrent en observation oblique des aspects localement "bosselés", pouvant provenir de pliures 132 (fig.2) proches de la surface comme les "fantômes" signalés dans les essais sur les ébauches du premier type.
      Le problème d'aspect subsiste donc de façon plus discrète.
      Un autre problème est apparu : au bout de plusieurs dizaines d'essais (chauffage suivi de formage), l'éjection des tubes 3 hors de l'outillage intérieur ou mandrin 1 (fig.1) devient difficile, la tête rétreinte adhérant à la partie sommitale 101 de cet outillage 1.
   5.3) Deuxième disposition améliorée (fig.17) :
      On a remplacé le fond en tôle de la buse 60 par une coupelle débordante 62 en céramique, formant un élément déflecteur qui isole thermiquement l'essentiel de la partie sommitale 101 pendant le chauffage.
      Les difficultés d'éjection ont disparu.
   5.4) Chauffage de la portion 5 par l'outillage extérieur de formage :
      L'outillage extérieur ou matrice 2 étant revêtu intérieurement d'un produit antiadhésion -du téflon- et étant chauffé à 210°C, on a obtenu des têtes rétreintes de tubes 3 d'aussi bonne qualité que précédemment à l'exception d'un état de surface granuleux pour la face extérieure de leurs épaulements conformés qui étaient en contact avec la matrice 2.
      Le temps de formage est rallongé, il reste toutefois inférieur à 2 secondes. L'état de surface de la face supérieure de l'épaule rend souhaitable son recouvrement par l'embase d'un goulot fixé sur la tête rétreinte.
   5.5) Moulage par compression d'une ébauche annulaire sur la tête rétreinte :
      On a ensuite procédé au moulage par compression d'une couronne annulaire de PE sur la tête rétreinte 7 d'un grand nombre de tubes 3 provenant du formage à chaud qui avait été exécuté selon les procédures définies en 5.3 puis en 5.4, ce moulage étant fait soit à la suite de ce formage (moins de 4 secondes après), soit en reprise. Il n'y a pas eu de différence sensible de résultat du moulage entre ces deux délais.
      On a déposé sur l'épaule conformée 8 une goutte annulaire 29 de PE fondu à 220°C, soit 90 à 100°C au-dessus de son point de fusion. Le PE de la goutte 28 est alors suffisamment visqueux pour que cette goutte 29 garde sa forme annulaire et s'ovalise modérément en section droite lorsqu'elle s'appuie sur l'épaule 8 (fig.19).
      La goutte 29 a été comprimée et moulée entre : d'une part la tête rétreinte 7 et la portion supérieure de l'outillage intérieur 1 qui dépasse du col 9 de cette tête 7, et d'autre part un outillage extérieur fait de tiroirs écartables se resserrant pour le moulage du goulot fileté 15 et de sa base 16.
      La figure 20 montre la structure obtenue.
      La couronne annulaire 14 en PE est parfaitement soudée à la tête rétreinte 7, elle comprend le goulot 15 et sa base annulaire 16 qui s'étend jusqu'à moins de 1 mm du raccordement 80 de l'épaule 8 et de la jupe 40. Cette base 16 s'amincit régulièrement depuis moins de 0,4 mm à la mi-largeur 81 de l'épaule 8 jusqu'à moins de 0,15 mm à se périphérie 160. Cette base 16 a les épaisseurs précises suivantes:
      0,7 mm au pied du goulot 15, 0,37 mm à mi-largeur de l'épaule 8, et périphérie 160 confondue avec le début de raccordement 80.
      L'épaule 8 ayant une épaisseur de 0,6 mm, l'épaule (8+16) du tube obtenu est particulièrement écrasable latéralement depuis sa mi-largeur.
      Le goulot 15 prolonge la surface intérieure du col 9 et lui est parfaitement soudé.
      Pour l'économie, on a raccourci ce col 9 à une hauteur de 1mm dans une partie des essais, obtenant une surface intérieure continue du goulot et sans défaut. Le col 9 peut être supprimé, l'épaule conformée 8 étant entière c'est-à-dire allant jusqu'à la portion supérieure axiale de l'outillage 1.
      La base 16 donne un aspect uniforme à l'épaule du tube 3, elle masque les défauts d'aspect indésirables.
   5.6) Essais sur des ébauches du deuxième type, d'épaisseur 0,32mm :
      Des centaines d'ébauches ont fait l'objet d'essais semblables aux essais précédents (5.3), (5.4) et (5.5). Les résultats sont satisfaisants et montrent avec les précédents la très bonne reproductibilité donnée par le formage au-dessus du point de fusion.

### Applications du tube de l'invention

Au conditionnement de produits divers, alimentaires, cosmétologiques, pharmaceutiques, pour soins hygiéniques, et d'entretien, avec un intérêt spécial pour les produits qu'on veut distribuer plus complètement, l'épaule du tube pouvant être écrasée, et pour les produits qu'on veut protéger de l'action de l'oxygène et de l'eau ou l'humidité tout en préservant leur arôme ou leur parfum.

## Revendications

1. Procédé de fabrication d'un tube (3) à paroi contenant plus de 60% en volume de matière plastique, à partir d'une ébauche (4) tubulaire essentiellement cylindrique, cette ébauche (4) étant superficiellement en matière(s) plastique(s) polymérique(s) à l'intérieur et à l'extérieur et ledit tube (3) à obtenir ayant une jupe (40) et une tête rétreinte (7), procédé dans lequel on enfile ladite ébauche tubulaire (4) autour d'un outillage intérieur (1), ledit tube (4) dépassant de cet outillage (1) d'une portion d'extrémité (5) ayant une paroi tubulaire, et on forme cette portion (5) au moyen d'outillages (1,2) agissant sur cette portion (5) en produisant sur sa paroi des plis de chiffonnage (13) et en écrasant ces plis (13), caractérisé en ce que :
- les outillages (1,2) agissant sur la portion (5) consistent en l'outillage intérieur (1) et en un outillage extérieur annulaire (2), les deux outillages (1,2) définissant respectivement après leur rapprochement l'un de l'autre la surface intérieure et la surface extérieure de la tête rétreinte (7) ;
et en ce que :
a) avant formage, on chauffe ladite ébauche (4) de façon à obtenir pour ladite portion (5) une température au moment du formage au moins égale au point de fusion de chacune desdites matière(s) plastique(s) polymérique(s) constituant superficiellement l'intérieur et l'extérieur de la paroi de l'ébauche (4) et de la portion (5), ces matières étant ainsi dans un état fondu visqueux au moment du formage de la portion (5);
b) on forme la portion tubulaire (5) ainsi chauffée par le seul rapprochement des outillages (1,2), ce rapprochement produisant les opérations successives suivantes :
b1) rétreint de la portion (5) en chiffonnant sa paroi selon lesdits plis de chiffonnage (13) ;
b2) écrasement de ces plis (13) entre les outillages (1 et 2) ;
b3) soudage complet de ces plis entre eux ;
b4) obtention de la tête rétreinte (7), qui comprend au moins une épaule (8) et est parfaitement soudée dans son épaisseur et sur ses surfaces intérieure et extérieure.

2. Procédé selon la revendication 1, dans lequel on produit, avec l'écrasement et le soudage des plis (13) entre eux, un exsudat de matière plastique desdits plis (13) sur chaque face de l'épaule conformée (8) formant un glaçage de ladite face.

3. Procédé selon la revendication 2, dans lequel on écrase lesdits plis (13) de façon à obtenir une épaisseur de ladite épaule conformée (8) inférieure à 1,35 fois l'épaisseur de ladite jupe (40).

4. Procédé selon la revendication 1, dans lequel selon l'étape (a) on dispose d'abord l'ébauche tubulaire (4) entre ledit outillage intérieur (1) ayant une partie sommitale (101) qui définit intérieurement ladite tête rétreinte (7) et un manchon rigide (36) entourant la portion d'extrémité (5) avec un jeu faible et la dépassant vers le haut, ladite portion d'extrémité (5) de l'ébauche (4) et ladite partie sommitale (101) de l'outillage (1) étant en position haute, puis on chauffe par un gaz chaud, de préférence de l'air chaud, l'intérieur de ladite portion (5) jusqu'à ce que celle-ci se déforme en une portion rétreinte ondulée (37) ayant un bourrelet d'extrémité fondu (38), puis on éloigne ledit manchon (36) de ladite portion rétreinte ondulée (37) et on procède à l'étape (b).

5. Procédé selon la revendication 4, dans lequel on chauffe l'intérieur de ladite portion d'extrémité (5) en y introduisant une buse éjectant radialement de l'air chauffé à au moins 250°C par des orifices latéraux, comprenant des orifices qui sont pour le chauffage à un niveau compris entre la mi-hauteur de la portion d'extrémité (5) et 3 mm en-dessous de l'extrémité (50) de ladite portion (5).

6. Procédé selon la revendication 5, dans lequel on réduit l'échauffement de la partie sommitale (101) au moyen d'un élément déflecteur et isolant fixé sous la buse.

7. Procédé selon la revendication 4, dans lequel l'outillage extérieur (2) est chauffé entre 100 et 150°C et pourvu d'un revêtement intérieur anti-adhésion.

8. Procédé selon la revendication 1, dans lequel les étapes (a) et (b) sont confondues, le chauffage de la portion (5) étant assuré par l'outillage extérieur (2) chauffé entre 150 et 300°C pendant l'écrasement desdits plis de chiffonnage (13).

9. Procédé selon la revendication 1, dans lequel ladite température au moment du formage est supérieure de 10 à 100°C au point de fusion de chacune des matières plastiques polymériques constituant superficiellement l'intérieur et l'extérieur de la paroi.

10. Procédé selon la revendication 1, dans lequel lesdites matières constituant superficiellement l'intérieur et l'extérieur de la paroi sont choisies dans le groupe comprenant les cinq familles suivantes : les polyéthylènes et les polyéthylènes linéaires, les polypropylènes, les polyamides, les polyamides modifiés, et les polyesters saturés.

11. Procédé selon la revendication 10, dans lequel lesdites matières constituant superficiellement la paroi sont chacune du polyéthylène ou du polyéthylène linéaire, et dans lequel la température au moment du formage est comprise entre 150 et 220°C.

12. Procédé selon la revendication 1, dans lequel ladite ébauche (4) a une paroi en une seule matière plastique polymérique.

13. Procédé selon la revendication 1, dans lequel lesdites matières plastiques polymériques constituant superficiellement la paroi de l'ébauche (4) forment respectivement une couche superficielle intérieure et une couche superficielle extérieure de ladite paroi, celle-ci étant multicouche et comprenant entre lesdites couches superficielles au moins une couche intermédiaire à effet barrière (20) liée à ces couches superficielles.

14. Procédé selon la revendication 13, dans lequel ladite paroi de l'ébauche (4) est d'épaisseur 0,2 à 0,9 mm, et dans lequel la ou lesdites couche(s) intermédiaire(s) à effet barrière (20) ont une épaisseur totale comprise entre 0,01 et 0,05 mm et sont en une matière faisant partie du groupe formé par : EVOH, PVDC, PAN, PVDF, PA, MXD6, copolymère de chlorure de vinyle et de vinylidène ("saran"), l'aluminium faiblement allié.

15. Procédé selon la revendication 13, dans lequel ladite couche intermédiaire à effect barrière est en l'une des matières du groupe constitué par le PE et les polyesters, cette couche étant recouverte par un dépôt comprenant de la silice et/ou de l'alumine.

16. Procédé selon la revendication 1, dans lequel ladite tête rétreinte (7) comprend un col (9) de diamètre plus faible que le diamètre de la jupe (40), ce col étant relié à la jupe (40) par ladite épaule conformée (8).

17. Procédé selon la revendication 16, dans lequel ledit col (9) de ladite tête rétreinte (7) est un goulot du tube (3), et dans lequel ledit outillage extérieur comprend des tiroirs annulaires se resserrant lors du soulèvement de l'ébauche (4) par l'outillage intérieur (1) et portant des reliefs intérieurs façonnant, sur l'extérieur dudit goulot, des reliefs de fixation d'un bouchage.

18. Procédé selon la revendication 16, dans lequel on fixe ensuite sur ladite tête rétreinte (7), une couronne annulaire (14) en matière plastique constituant au moins l'extérieur d'un goulot (15) du tube (3).

19. Procédé selon la revendication 18, dans lequel on réalise et fixe ladite couronne (14) en comprimant une ébauche annulaire (29) de ladite couronne (14) sur ladite épaule (8) et autour dudit col (9), ladite ébauche (29) étant en matière plastique compatible en fusion avec la matière plastique constituant superficiellement l'extérieur de la paroi de l'ébauche tubulaire (4) et étant dans un état visqueux à une température comprise entre 60 et 150°C au-dessus de son point de fusion.

20. Procédé selon la revendication 19, dans lequel l'épaule conformée (8) a une épaisseur inférieure à 1,35 fois l'épaisseur de la jupe (40) ladite jupe (40) ayant une épaisseur inférieure ou égale à 0,6 mm, et dans lequel la couronne (14) a une base annulaire (16) qui s'étend jusqu'à moins de 1 mm du raccordement de l'épaule (8) avec la jupe (40) en s'amincissant depuis moins de 0,4 mm d'épaisseur à mi-largeur de l'épaule (8) jusqu'à moins de 0,15 mm d'épaisseur à sa périphérie sur le ou près dudit raccordement.

21. Procédé selon la revendication 18, dans lequel on rapporte ladite couronne annulaire (14) sur la tête rétreinte (7) et on la fixe par un procédé du groupe formé par : le collage, le soudage par ultra-sons, le soudage par induction.

22. Procédé selon la revendication 18, dans lequel moule par injection ladite couronne (14, 140) sur ladite tête rétreinte, la matière plastique moulée étant compatible en fusion avec la matière constituant superficiellement l'extérieur de la paroi du tube (3).

23. Procédé selon la revendication 21, dans lequel on moule ladite couronne (14) en lui donnant un orifice central (26) plus étroit que ledit col (9) et des portions en forme de bretelles (27) soudées à l'intérieur dudit col (9) et se prolongeant contre la surface intérieure de ladite épaule (8), ladite matière plastique moulée étant aussi compatible en fusion avec la matière constituant superficiellement l'intérieur de la paroi dudit tube (23) et les bretelles (27) étant également soudées à la surface intérieure de l'épaule (8).

24. Tube (3) à paroi contenant plus de 60% de matière plastique, cette paroi étant superficiellement en matière(s) plastique(s) polymérique(s) à l'intérieur et à l'extérieur, ledit tube (3) ayant une jupe (40) et une tête rétreinte (7) comprenant une épaule annulaire (8) conformée, la tête rétreinte ayant des plis chiffonnés, empilés et liés entre eux a l'intérieur et à l'extérieur de ladite paroi, caractérisé en ce que :
- ladite jupe (40) a une épaisseur comprise entre 0,2 et 0,9 mm,
- ladite épaule annulaire (8) a une largeur de 4 à 20 mm,
- la matière du raccordement (80) entre ladite jupe (40) et ladite épaule (8) est unique et continue,
- chaque face de l'épaule (8) est glacée par un exsudat de la matière plastique constituant superficiellement ladite face, cette matière plastique s'étant échappée à l'état fondu des plis (13) et ayant été étalée et lissée,
- lesdits plis (13) sont parfaitement soudés entre eux et sont amincis de façon variable de sorte que ladite épaule (8) comportant lesdits plis (13) a une épaisseur inférieure à 1,35 fois ladite épaisseur de la jupe (40) et est facilement écrasable latéralement.

25. Tube (3) selon la revendication 24, dont la paroi comprend au moins une couche intermédiaire à effet barrière (20) et dont la tête rétreinte (7) comporte un col (9) de diamètre plus faible que la jupe (40) et l'épaule annulaire (8) reliant ce col (9) à ladite jupe (40), ladite épaule (8) ayant une épaisseur comprise entre 0,9 fois et 1,25 fois l'épaisseur de la jupe (40), et ladite couche intermédiaire (20) s'étendant depuis le bas de la jupe (40) jusqu'au haut dudit col (9) en une seule pièce avec des plis amincis (24) inclus dans lesdits plis chiffonnés, amincis et soudés entre eux (13).

26. Tube selon la revendication 25, dans lequel la ou les couche(s) intermédiaire(s) à effet barrière (20) en une seule pièce a (ou ont) une épaisseur totale de 0,01 à 0,05 mm au niveau de la jupe (40) et est (ou sont) en l'une des matières du groupe formé par : EVOH, PVDC, PAN, PVDF, PA, PA modifiés, copolymère de chlorure de vinyle et de vinylidène ("saran"), l'aluminium faiblement allié.

27. Tube (3) selon la revendication 25, dans lequel ledit col (9) et ladite épaule (8) sont surmontés d'une couronne annulaire (14) en matière plastique liée audit col (9) et à ladite épaule (8) et constituant l'extérieur d'un goulot (15) du tube (3).

28. Tube (3) selon la revendication 27, dans lequel ladite couronne annulaire (14) est en matière plastique compatible en fusion avec la matière constituant superficiellement l'extérieur de la paroi du tube (3) et est fixée sur la tête rétreinte (7) par l'une des méthodes du groupe comprenant le moulage et le soudage.

29. Tube selon la revendication 28, dans lequel ladite couronne annulaire (14) s'arrête avant la moitié de la largeur de l'épaule (8) ou bien dépasse cette moitié de largeur par une portion d'épaisseur inférieure à moins de 0,4 mm, le tube ayant alors une épaule d'épaisseur totale inférieure à 1 mm au milieu de sa largeur et inférieure à 0,8 mm à sa jonction avec la jupe (40).

## Claims

1. A process for manufacturing a tube (3), with a wall containing more than 60% by volume of plastics material, from a substantially cylindrical tubular blank (4), the inside and outside surfaces of this blank being of polymeric plastics material(s), and said tube (3) to be obtained having a skirt (40) and a necked head (7), said process comprising threading said tubular blank (4) around an inner tool (1), said tube (3) extending beyond this tool (1) with an end portion (5) having a tubular wall, and forming the end portion (5) by means of tools (1,2) acting on the end portion (5) producing crumpled folds (13) on its wall and crushing the folds (13), characterised in that:
the tools (1,2) acting on the portion (5) consist of the inner tool (1) and an annular outer tool (2), the tools (1,2) being brought together and defining the inner surface and the outer surface, respectively, of the necked head (7);
and that:
a) prior to the shaping operation, said blank (4) is heated in order to obtain for said end portion (5) a temperature at the time of the shaping operation which is at least equal to the melting point of each of said polymeric plastics material(s) forming the inside and outside surfaces of the wall of said blank (4), these materials thus being in a viscous molten state at the time of the shaping operation of the portion (5);
b) the end portion (5), which was initially tubular, thus heated, is formed by the single bringing together of the tools (1,2), this bringing together producing the following successive operations:
b1) necking of the portion (5) by crumpling its wall along said crumpled folds (13)
b2) crushing of these folds (13) between the tools (1 and 2);
b3) complete welding of these folds to one another;
b4) obtaining the necked head (7), which includes at least one shoulder (8) and is perfectly welded in its thickness and at its inner and outer surfaces.

2. A process according to Claim 1, in which crushing and welding of the folds (13) together produces an exudate of plastics material of said folds (13) on each face of the shaped shoulder (8) forming a glazing of said face.

3. A process according to Claim 2, wherein said folds (13) are crushed in order to make the thickness of said shoulder shaped (8) less than 1.35 times the thickness of said skirt (40).

4. A process according to Claim 1, in which in step (a) the tubular blank (4) is initially placed between said inner tool (1) which has a top part (101) defining the inside of said necked head (7) and a rigid sleeve (36) which surrounds the end portion (5) with slight clearance and passing upwardly beyond it, said end portion (5) of the blank (4) and said top part (101) of the tool (1) being in a top position, and then hot gas, preferably hot air, is used to heat the inside of said portion (5) until it deforms to become an undulating necked portion (37) which has a molten end edge (38), and then said sleeve (36) is removed from said undulating necked portion (37), and step (b) then follows.

5. A process according to Claim 4, in which the inside of said end portion (5) is heated by introducing into it a nozzle which radially ejects air which has been heated to at least 250°C through lateral orifices, comprising orifices, which, for heating purposes, are placed at a level which is between half-way up the end portion (5) and 3 mm below the end (50) of said portion (5).

6. A process according to Claim 5, in which overheating of the top part (101) is reduced by means of a deflecting and insulating element fixed under the nozzle.

7. A process according to Claim 4, in which the outer tool (2) is heated to between 100 and 150°C and is provided with an inner non-stick lining.

8. A process according to Claim 1, in which steps (a) and (b) are merged, the portion (5) being heated by the outer tool (2) which is heated to between 150 and 300°C for the operation of crushing said crumpled folds (13).

9. A process according to Claim 1, in which said temperature at the time of the shaping operation is greater by between 10 and 100_C than the melting point of each of the polymeric plastics materials which form the inside and outside surfaces of the wall.

10. A process according to Claim 1, in which said materials forming the inside and outside surfaces of the wall are selected from the group comprising the following five families linear polyethylenes and polyethylene, polypropylenes, polyamides, modified polyamides, and saturated polyesters.

11. A process according to Claim 10, in which said materials which form the surfaces of the wall are each polyethylene or linear polyethylene, and in which the temperature at the time of the shaping operation is between 150 and 220°C.

12. A process according to Claim 1, in which said blank (4) has a wall made of a single polymeric plastics material.

13. A process according to Claim 1, in which said polymeric plastics materials of which the wall surface of the blank (4) is made respectively form an inner surface layer and an outer surface layer of said wall, this wall being multi-layered and comprising between said surface layers at least one intermediate layer which has a barrier effect (20) and is bonded to the surface layers.

14. A process according to Claim 13, in which said wall of the blank (4) is between 0.2 and 0.9 mm in thickness, and in which the total thickness of said intermediate layer(s) which acts/act as a barrier (20) is between 0.01 and 0.05 mm and are made of a material belonging to the group formed by : EVOH, PVDC, PAN, PVDF, PA, MXD6, vinyl chloride and vinylidene copolymer ("saran"), slightly alloyed aluminium.

15. A process according to Claim 13, in which said intermediate layer which has a barrier effect is one of the materials in the group formed by PE and polyesters, this layer being coated by a deposit comprising silica and/or alumina.

16. A process according to Claim 1, in which said necked head (7) comprises a neck (9) which is less in diameter than the skirt (40), the neck being connected to the skirt (40) by said shaped shoulder (8).

17. A process according to Claim 16, in which said neck (9) of said necked head (7) is a bottle-neck (3) of the tube, and in which said outer tool comprises annular extension pieces which contract when the blank (4) is being lifted off by the inner tool (1) and which have internal contours which make contours on the outside of said neck for fixture of a stopper.

18. A process according to Claim 16, in which an annular rim (14) of plastics material constituting at least the outside of a neck (15) of the tube (3) is then fixed to said necked head (7).

19. A process according to Claim 18, in which said rim (14) is made and fixed by compressing an annular blank (29) of said rim (14) onto said shoulder (8) and around said neck (9), said blank (29) being made of a plastics material which is compatible on melting with the plastics material of which the outer surface of the wall of the tubular blank (4) is made and being in a viscous state at a temperature of between 60 and 150°C above its melting point.

20. A process according to Claim 19, in which the thickness of the shoulder shaped (8) is less than 1.35 times the thickness of the skirt (40), said skirt (40) being in thickness less than or equal to o.6 mm, and in which the rim (14) has an annular base (16) extending to less than 1 mm from the join of the shoulder (8) to the skirt (40) and then becoming thinner from a thickness of less than 0. 4 mm at the half-width of the shoulder ( 8) to a thickness of less than 0.15 mm at its periphery on the, or near, said join.

21. A process according to Claim 18, in which said annular rim (14) is brought to the necked head (7) and is fixed by a process from the group formed by: sticking, ultrasonic welding, induction welding,

22. A process according to Claim 18, in which said rim (14, 140) is injection moulded onto said necked head, the moulded plastics material being compatible on melting with the material of which the outer surface of the wall of the tube (3) is made.

23. A process according to Claim 22, in which said rim (14) is moulded and is thereby given a central orifice (26) which is narrower than said neck (9) and portions in the shape of straps (27) which are welded to the inside of said neck (9) and which continue towards the inside surface of said shoulder (8), said moulded plastics material also being compatible on melting with the material of which the inside surface of the wall of said tube (23) is made, and the straps (27) also being welded to the inside surface of the shoulder (8).

24. A tube (3) with a wall containing more than 60% plastics material, the inside and outside surfaces of the wall being of polymeric plastics material(s), said tube (3) having a skirt (40) and a necked head (7) comprising a shaped annular shoulder (8), the necked head having crumpled folds which are piled up and bonded together inside and outside said wall, characterised in that:
• said skirt (40) is between 0.2 and 0.9 mm in thickness,
• said annular shoulder (8) is between 4 and 20 mm in width,
• a connection (80) between said skirt (40) and said shoulder (8) is a single and continuous material,
• each face of the shoulder (8) is glazed with an exudate of the plastics material of which the surface of said face is made, this plastics material having come away from the folds (13) in the molten state and having been spread out and smoothed;
• said folds (13) are perfectly welded to one another, and are thinned in variable fashion such that said shoulder (8) including said folds (13) has a thickness less than 1.35 times said thickness of the skirt (40) and is easily crushable laterally.

25. A tube (3) according to Claim 24 whose wall comprises at least one intermediate layer which acts as a barrier (20) and whose necked head (7) comprises a neck (9) which is less in diameter than the skirt (40) and the annular shoulder (8) connecting the neck (9) to said skirt (40), said shoulder (8) being between 0.9 times and 1-25 times the thickness of the skirt (40). and said intermediate layer (20) extending from the bottom of the skirt (40) to the top of said neck (9) in one single piece with the folds (24) of reduced thickness being included in said crumpled folds which are of reduced thickness and welded together (13).

26. A tube according to Claim 25, in which the intermediate layer(s) which has/have a barrier effect (20) and which are in one single piece has/have a total thickness of 0.01 to 0.05 mm at the level of the skirt (40) and is (or, are) made of one of the materials from the group formed by : modified EV0H, PVDC, PAN, PVDF, PA, PA, vinyl chloride and vinylidene copolymer ("saran"), slightly alloyed aluminium.

27. A tube (3) according to Claim 25, in which said neck (9) and said shoulder (8) are surmounted by an annular rim (14) made of plastics material which is joined to said neck (9) and to said shoulder (8) and which forms the outside of a neck (15) of the tube (3).

28. A tube (3) according to Claim 27, in which said annular rim (14) is made of a plastics material which is compatible on melting with the material of which the outside surface of the wall of the tube (3) is made and is fixed to the necked head (7) by one of the methods of the group comprising moulding and welding.

29. A tube according to Claim 28, in which said annular rim (14) stops before half the width of the shoulder (8) or goes beyond that half of the width by a portion which is less at least than 0,4 mm in thickness, the tube thus having a shoulder whose total thickness is less than 1 mm in the middle of its width and less than 0.8 mm at its join to the skirt (40).

## Patentansprüche

1. Verfahren zur Herstellung eines Rohres (3) mit einer Wand, die mehr als 60 Vol.-% Kunststoff enthält, aus einem rohrförmigen, im wesentlichen zylindrischen Rohling (4), wobei dieser Rohling (4) innen und außen an der Oberfläche aus Polymer-Kunststoffmaterial(ien) besteht und das zu erzielende Rohr (3) einen Mantel (40) und einen eingeschnürten Kopf (7) aufweist, wobei man in diesem Verfahren den genannten rohrförmigen Rohling (4) rund um eine innere Werkzeuggarnitur (1) aufzieht, das genannte Rohr (4) dabei diese Werkzeuggarnitur (1) um einen Endabschnitt (5) überragt, der eine rohrförmige Wand aufweist, und man diesen Abschnitt (5) mittels Werkzeuggarnituren (1, 2) umformt, die auf diesen Abschnitt (5) einwirken, indem man auf seiner Wand Knitterfalten (13) erzeugt und diese Falten (13) flachdrückt,
dadurch gekennzeichnet, daß
- die Werkzeuggarnituren (1, 2), die auf den Abschnitt (5) einwirken, aus der inneren Werkzeuggarnitur (1) und aus einer ringförmigen Werkzeuggarnitur (2) bestehen, und die beiden Werkzeuggarnituren (1, 2) jeweils nach ihrer Annäherung aneinander die innere Oberfläche und die äußere Oberfläche des eingeschnürten Kopfes (7) festlegen;
und daß
a) man vor der Verformung den genannten Rohling (4) derart erhitzt, daß man für den genannten Abschnitt (5) im Augenblick der Formgebung eine Temperatur erhält, die mindestens gleich ist dem Schmelzpunkt des Polymer-Kunststoffmaterials bzw. eines jeden der genannten Polymer-Kunststoffmaterialien, das bzw. die innen und außen die Oberfläche der Wand des Rohlings (4) und des Abschnitts (5) bildet bzw. bilden, wobei sich diese Materialien zum Zeitpunkt der Verformung des Abschnitts (5) in geschmolzenem, viskosem Zustand befinden; und
b) man den rohrförmigen Abschnitt (5), der so erhitzt wurde, durch die alleinige Annäherung der Werkzeuggarnituren (1, 2) verformt, wobei diese Annäherung die nachfolgenden, aufeinanderfolgenden Vorgänge ergibt:
b1) Einschnüren des Abschnitts (5), indem man seine Wand entsprechend dem genannten Knitterfalten (13) zerknittert;
b2) Flachdrücken dieser Falten (13) zwischen den Werkzeuggarnituren (1 und 2);
b3) vollständiges Verschweißen dieser Falten miteinander; und
b4) Erzielen des eingeschnürten Kopfes (7), der mindestens eine Schulter (8) aufweist und in seiner Dicke und auf seiner Innen- und Außenfläche vollständig verschweißt ist.

2. Verfahren nach Anspruch 1, worin man mit dem Flachdrücken und der Verschweißung der Falten (13) miteinander ein Kunststoff-Exsudat der genannten Falten (13) auf jeder Stirnfläche der geformten Schulter (8) bildet, das die genannte Stirnfläche glänzend macht.

3. Verfahren nach Anspruch 2, worin man die genannten Falten (13) derart flachdrückt, daß man eine Dicke der genannten, geformten Schulter (8) erzielt, die kleiner ist als das 1,35-fache der Dicke des genannten Mantels (40).

4. Verfahren nach Anspruch 1, worin man im Abschnitt (a) zunächst den rohrförmigen Rohling (4) zwischen der genannten inneren Werkzeuggarnitur (1), die einen Scheitelabschnitt (101) aufweist, der den genannten, eingeschnürten Kopf (7) von innen her abgrenzt, und einer starren Büchse (36) anordnet, die den Endabschnitt (5) mit geringem Spiel umgibt und über diesen hinaus nach oben steht, wobei der genannte Endabschnitt (5) des Rohlings (4) und der genannte Scheitelabschnitt (101) der Werkzeuggarnitur (1) sich in einer oberen Lage befinden, man dann mit einem heißen Gas, bevorzugt mit Heißluft, das Innere des genannten Abschnitts (5) erhitzt, bis sich dieser zu einem eingeschnürten, gewellten Abschnitt (37) verformt, der eine geschmolzene Endverdickung (38) aufweist, und man dann die genannte Büchse (36) vom eingeschnürten, gewellten Abschnitt (37) entfernt und mit dem Schritt (b) fortfährt.

5. Verfahren nach Anspruch 4, worin man das Innere des genannten Endabschnitts (5) dadurch erhitzt, daß man dort eine Düse einführt, die radial auf mindestens 250°C erhitzte Luft durch seitliche Öffnungen ausbläst, die Öffnungen umfassen, die zum Erhitzen auf einer Höhe liegen, die zwischen der mittleren Höhe des Endabschnitts (5) und 3 mm unter dem Ende (50) des genannten Abschnitts (5) liegt.

6. Verfahren nach Anspruch 5, worin man die Erhitzung des Scheitelabschnitts (101) mittels eines Ablenk- und Isolierelements verringert, das unter der Düse befestigt ist.

7. Verfahren nach Anspruch 4, worin die äußere Werkzeuggarnitur (2) auf zwischen 100 und 150°C erhitzt wird und mit einer inneren Anti-Haft-Verkleidung versehen ist.

8. Verfahren nach Anspruch 1, worin die Schritte (a) und (b) zusammengefaßt sind, wobei die Erhitzung des Abschnitts (5) durch die äußere Werkzeuggarnitur (2) sichergestellt ist, die während des Flachdrückens der genannten Knitterfalten (13) auf zwischen 150 und 300°C erhitzt wird.

9. Verfahren nach Anspruch 1, worin die genannte Temperatur zum Zeitpunkt der Verformung um 10 bis 100°C höher ist als der Schmelzpunkt eines jeden der Polymer-Kunststoffmaterialien, die auf der Innen- und Außenseite der Wand die Oberfläche bilden.

10. Verfahren nach Anspruch 1, worin die genannten Materialien, die auf der Innen- und Außenseite der Wand die Oberfläche bilden, in der Gruppe ausgewählt sind, die die fünf folgenden Familien umfaßt: die Polyethylene und die linearen Polyethylene, die Polypropylene, die Polyamide, die modifizierten Polyamide und die gesättigten Polyester.

11. Verfahren nach Anspruch 10, worin die genannten Materialien, die die Oberfläche der Wand bilden, jeweils aus Polyethylen oder linearem Polyethylen bestehen, und worin die Temperatur zum Zeitpunkt der Verformung zwischen 150 und 220°C liegt.

12. Verfahren nach Anspruch 1, worin der genannte Rohling (4) eine Wand aus einem einzigen Kunststoffmaterial aufweist.

13. Verfahren nach Anspruch 1, worin die genannten polymeren Kunststoffe, die die Oberfläche der Wand des Rohlings (4) bilden, jeweils eine innere Oberflächenschicht und eine äussere Oberflächenschicht der genannten Wand bilden, die mehrschichtig ist und zwischen den genannten Oberflächenschichten mindestens eine Zwischenschicht mit Sperrwirkung (20) aufweist, die mit den Oberflächenschichten verbunden ist.

14. Verfahren nach Anspruch 13, worin die genannte Wand des Rohlings (4) eine Dicke von 0,2 bis 0,9 mm aufweist, und worin die genannte(n) Zwischenschicht(en) mit Sperrwirkung (20) eine Gesamtdicke aufweist bzw. aufweisen, die zwischen 0,01 und 0,05 mm liegt, und aus einem Material besteht bzw. bestehen, das einen Teil der Gruppe bildet, die gebildet ist durch: EVOH (Copolymer aus Ethylen und Vinylalkohol), PVDC (Vinyliden-Polychlorid), PAN (Polyacrylonitril), PVDF (Vinyliden-Polyfluorid), PA (Polyamid), MXD6 (Metaxylendiamin 6), ein Copolymer aus Vinylchlorid und Vinyliden ("Saran") und niedriglegiertes Aluminium.

15. Verfahren nach Anspruch 13, worin die genannte Zwischenschicht mit Sperrwirkung eines der Materialien der Gruppe ist, die von Polyethylen und den Polyestern gebildet ist, wobei diese Schicht von einer Ablagerung abgedeckt ist, die Siliciumoxid und/oder Aluminiumoxid aufweist.

16. Verfahren nach Anspruch 1, worin der genannte, eingeschnürte Kopf (7) einen Hals (9) mit einem Durchmesser aufweist, der kleiner ist als der Durchmesser des Mantels (40), wobei dieser Hals mit dem Mantel (40) durch die genannte, geformte Schulter (8) verbunden ist.

17. Verfahren nach Anspruch 16, worin der genannte Hals (9) des genannten, eingeschnürten Kopfes (7) ein Flaschenhals des Rohres (3) ist, und worin die genannte äußere Werkzeuggarnitur ringförmige Schieber aufweist, die sich während des Anhebens des Rohlings (4) durch die innere Werkzeuggarnitur (1) verengen und innere Erhöhungen aufweisen, die auf der Außenseite des genannten Flaschenhalses Erhöhungen zur Befestigung eines Verschlusses ausformen.

18. Verfahren nach Anspruch 16, worin man zunächst auf dem eingeschnürten Kopf (7) einen ringförmigen Kranz (14) aus Kunststoff befestigt, der mindestens die Außenseite eines Flaschenhalses (15) des Rohres (3) bildet.

19. Verfahren nach Anspruch 18, worin man den genannten Kranz (14) dadurch ausführt und befestigt, daß man einen ringförmigen Rohling (29) des genannten Kranzes (14) auf der genannten Schulter (8) und rund um den genannten Hals (9) zusammendrückt, wobei der genannte Rohling (29) aus Kunststoff besteht, der mit dem Kunststoff verschmelzbar ist, der die Außenoberfläche der Wand des rohrförmigen Rohlings (4) bildet, und der sich bei einer Temperatur, die um zwischen 60 und 150°C unter seinem Schmelzpunkt liegt, in einem viskosen Zustand befindet.

20. Verfahren nach Anspruch 19, worin die geformte Schulter (8) eine Dicke aufweist, die kleiner ist als das 1,35-fache der Dicke des Mantels (40), wobei der genannte Mantel (40) eine Dicke aufweist, die kleiner oder gleich ist 0,6 mm, und worin der Kranz (14) eine ringförmige Basis (16) aufweist, die sich bis zu weniger als 1 mm von der Verbindung der Schulter (8) mit dem Mantel (40) erstreckt und sich dabei von mindestens 0,4 mm Dicke bei mittlerer Breite der Schulter (8) bis zu weniger als 0,15 mm Dicke an ihrem Umfang auf oder nahe der genannten Verbindung verjüngt.

21. Verfahren nach Anspruch 18, worin man den genannten ringförmigen Kranz (14) auf dem eingeschnürten Kopf (7) aufsetzt und ihn durch ein Verfahren aus jener Gruppe befestigt, die gebildet ist durch: die Verklebung, die Ultraschall-Verschweißung und die Induktions-Verschweißung.

22. Verfahren nach Anspruch 18, worin man den genannten Kranz (14, 140) auf den genannten, eingeschnürten Kopf durch Spritzguß aufformt, wobei der geformte Kunststoff mit dem Material verschmelzbar ist, das die Oberfläche der Außenseite der Wand des Rohres (3) bildet.

23. Verfahren nach Anspruch 21, worin man den genannten Kranz (14) dadurch formt, daß man ihm eine mittige Öffnung (26), die enger ist als der genannte Hals (9), und gurtförmige Abschnitte verleiht, die auf der Innenseite des genannten Halses (9) aufgeschweißt werden und sich zur die Innenoberfläche der genannten Schulter (8) hin verlängern, wobei der genannte, geformte Kunststoff auch mit dem Material verschmelzbar ist, das die Innenseite der Wand des genannten Rohres (23) bildet, und wobei die Gurte (27) ebenfalls mit der Innenoberfläche der Schulter (8) verschweißt werden.

24. Rohr (3) mit einer Wand, die mehr als 60% Kunststoff enthält, wobei diese Wand innen und außen an der Oberfläche aus polymer(en) Kunststoffmaterial(ien) besteht, das genannte Rohr (3) einen Mantel (40) und einen eingeschnürten Kopf (7) aufweist, der eine ringförmige, geformte Schulter (8) aufweist, und der eingeschnürte Kopf Knitterfalten aufweist, die flachgedrückt und auf der Innen- und Außenseite der genannten Wand miteinander verbunden sind, dadurch gekennzeichnet, daß
- der genannte Mantel (40) eine Dicke aufweist, die zwischen 0,2 und 0,9 mm liegt,
- die genannte, ringförmige Schulter (8) eine Breite von 4 bis 20 mm aufweist,
- das Material der Verbindung (80) zwischen dem genannten Mantel (40) und der genannten Schulter (8) einheitlich und durchgehend ist,
- jede Stirnfläche der Schulter (8) durch ein Exsudat des Kunststoffes glänzend gemacht ist, das die Oberfläche der genannten Stirnfläche bildet, und dieser Kunststoff in geschmolzenem Zustand den Falten (13) entzogen wurde sowie verteilt und geglättet wurde, und
- die genannten Falten (13) vollständig miteinander verschweißt und in variabler Weise derart verjüngt sind, daß die genannte Schulter (8) die genannten Falten (13) in einer Dicke aufweist, die kleiner ist als das 1,35-fache der genannten Dicke des Mantels, und seitlich leicht flachdrückbar ist.

25. Rohr (3) nach Anspruch 24, dessen Wand mindestens eine Zwischenschicht mit Sperrwirkung (20) aufweist und dessen eingeschnürter Kopf (7) einen Hals (9) mit einem Durchmesser aufweist, der kleiner ist als der Mantel (40) und die ringförmige Schulter (8), die den Hals (9) mit dem genannten Mantel (40) verbindet, wobei die genannte Schulter (8) eine Dicke aufweist, die zwischen dem 0,9-fachen und dem 1,25-fachen der Dickedes Mantels (40) liegt und die genannte Zwischenschicht (20) sich von der Unterseite des Mantels (40) aus bis zur Oberseite des genannten Halses (9) einstückig erstreckt, mit verjüngten Falten (24), die in den genannten Knitterfalten (13) eingeschlossen sind, die verjüngt und miteinander verschweißt sind.

26. Rohr nach Anspruch 25, worin die einstückige(n) Zwischenschicht(en) mit Sperrwirkung (20) eine Gesamtdicke von 0,01 bis 0,05 mm auf der Höhe des Mantels (40) aufweist bzw. aufweisen und aus einem der Materialien der Gruppe besteht, die gebildet ist von: EVOH (Copolymer aus Ethylen und Vinylalkohol), PVDC (Vinyliden-Polychlorid), PAN (Polyacrylonitril), PVDF (Vinyliden-Polyfluorid), PA (Polyamid), modifiziertes PA (Polxamid), ein Copolymer aus Vinylchlorid und Vinyliden ("Saran") und niedriglegiertes Aluminium.

27. Rohr (3) nach Anspruch 25, worin über dem genannten Hals (9) und der genannten Schulter (8) ein ringförmiger Kranz (14) aus Kunststoff angebracht ist, der mit dem genannten Hals (9) und mit der genannten Schulter (8) verbunden ist und die Außenseite eines Flaschenhalses (15) des Rohres (3) bildet.

28. Rohr (3) nach Anspruch 27, worin der genannte ringförmige Kranz (14) aus einem Kunststoffmaterial besteht, das mit dem Material verschmelzbar ist, das auf der Außenseite des Rohres (3) die Oberfläche bildet, und auf dem eingeschnürten Kopf (7) durch eines der Verfahren der Gruppe befestigt ist, die das Abformen bzw. den Guß und die Schweissung umfaßt.

29. Rohr nach Anspruch 28, worin der genannte ringförmige Kranz (14) vor der Hälfte der Breite der Schulter (8) endet oder diese Hälfte der Breite um einen Abschnitt mit einer Dicke überschreitet, die um mindestens 0,4 mm kleiner ist, wobei das Rohr dann eine Schulter mit einer Gesamtdicke aufweist, die in der Mitte ihrer Breite kleiner ist als 1 mm und an ihrere Verbindung mit dem Mantel (40) kleiner ist als 0,8 mm.
